# EUROPÄISCHE PATENTSCHRIFT

(11) **EP 1 935 111 B1**
(45) Veröffentlichungstag und Bekanntmachung des Hinweises auf die Patenterteilung: **12.02.2020**
(21) Anmeldenummer: 06793483.6
(22) Anmeldetag: 13.09.2006
(51) Int. Cl.: H04B 3/54

(54) **STROMVERSORGUNGS- UND KOMMUNIKATIONSSYSTEM FÜR EIN PASSAGIERFLUGZEUG**
POWER SUPPLY AND COMMUNICATION SYSTEM FOR A PASSENGER PLANE
SYSTEME D'ALIMENTATION ET DE COMMUNICATION POUR UN AERONEF TRANSPORTANT DES PASSAGERS

(30) Priorität: 15.09.2005 DE 102005044195
(43) Veröffentlichungstag der Anmeldung: 25.06.2008
(73) Patentinhaber: Airbus Operations GmbH, 21129 Hamburg (DE)
(72) Erfinder: GÖDECKE, Rolf, 21147 Hamburg (DE); MOREAUX, Jean-Paul, 21614 Buxtehude (DE)
(74) Vertreter: Bird & Bird LLP
(86) Internationale Anmeldenummer: PCT/EP2006/066322
(87) Internationale Veröffentlichungsnummer: WO 2007/031538

(56) Entgegenhaltungen:
- US-A1- 2001 008 391
- US-B1- 6 172 597

## Beschreibung

Die Erfindung bezieht sich allgemein auf elektrische Versorgungs- und Datenübertragungssysteme und insbesondere auf ein kombiniertes Stromversorgungs- und Kommunikationssystem für die elektrische Versorgung und die Übertragung von Daten an mehrere Endgeräte nach dem Oberbegriff von Anspruch 1 sowie ein entsprechendes Verfahren zum Übertragen von Daten über ein Stromversorgungskabel. Insbesondere ist die Erfindung anwendbar in einem Flugzeug.

In US 2001/0008391 wird ein Powerline-System beschrieben, bei dem Daten über eine Stromversorgungsleitung parallel übertragen werden, wobei die Daten auf mehrere Übertragungskanäle aufgeteilt werden und paketweise übertragen werden.

Die für eine weiträumige Verteilung ausgelegten Powerline-Systeme nach dem Stand der Technik eignen sich jedoch nicht für große Datenmengen von bis zu 1 Gbit/s, wie sie z.B. für Video-on-Demand anfallen. Ferner sind die bekannten Systeme, die in den standardmäßigen Energieversorgungsnetzen eingesetzt werden, nicht in Bezug auf Effizienz der eingesetzten Ressourcen optimiert, d.h. es wird die bereits bestehende Verkabelung verwendet, und die Leitungslänge ist von untergeordnetem Interesse. Die bekannten Techniken sind daher nicht ohne weiteres einsetzbar, wenn der Verkabelungsaufwand minimiert werden muss, beispielsweise um Gewicht zu sparen.

In WO 02 123688 A2 wird ein kombiniertes Daten- und Stromverteilungsnetz beschrieben, mit dem das Verdrahtungsgewicht in dem Flugzeug reduziert werden soll und mit dem nahezu alle größeren Sektionen des Flugzeuges verdrahtet werden können. Dies wird dadurch erreicht, dass Daten von mehreren Sensoren, die über das Flugzeug verteilt sind, an Datenknoten gesammelt werden, die sich an zentralen Stellen im Flugzeug befinden, und über einen Bus mehreren System-Controllern zur Verfügung gestellt werden.

Ein weiteres Beispiel für den Stand der Technik findet sich in US6172597.

Bei diesem Stand der Technik ist der Verdrahtungsaufwand aber immer noch sehr hoch, da lediglich die physikalischen Leitungen an einem Punkt zusammengefasst werden, aber immer noch Kabel für die Daten und Kabel für die Stromversorgung verlegt werden müssen.

Es ist Aufgabe der vorliegenden Erfindung, eine optimale Versorgung von über das Flugzeug verteilten Verbrauchern sowohl mit elektrischer Energie als auch mit den gewünschten Kommunikations-Ressourcen zu ermöglichen und gleichzeitig den Verkablungsaufwand zu minimieren.

Diese Aufgabe wird erfindungsgemäß durch das kombinierte Versorgungs- und Kommunikationssystem für mehrere Endgeräte nach Anspruch 1 bzw. das Verfahren zum Übertragen von Daten über ein Stromversorgungskabel nach Anspruch 8 gelöst. Bevorzugte Ausführungsformen der Erfindung sind Gegenstand der Unteransprüche.

Der Erfindung liegt der Gedanke zugrunde, als Versorgungskabel für die kombinierte Versorgung der Sitzeinheit ein mehradriges Kabel und insbesondere ein Drehstrom-Kabel mit drei Phasenleitern und einem Nullleiter zu verwenden, das vorzugsweise eine Abschirmung aufweist. Das Versorgungskabel wird durch jedes der mehreren Endgeräte durchgeschleift, und in jedem Endgerät ist ein Modem integriert, mit dem Daten in das Versorgungskabel eingespeist werden bzw. ausgekoppelt werden. Dabei dient wenigstens ein Leiter des Kabels als Übertragungskanal in Aufwärtsrichtung und wenigstens ein Leiter des Kabels als Übertragungskanal in Abwärtsrichtung. Insbesondere werden jeweils zwei Kabel für einen Übertragungskanal verwendet.

Dementsprechend ist das erfindungsgemäße kombinierte Versorgungs- und Kommunikationssystem zum Übertragen von Daten zwischen einem Daten-Server und wenigstens einem von mehreren Endgeräten über ein Stromversorgungskabel, wobei der Daten-Server und jedes der mehreren Endgeräte jeweils über eine Ein-/Auskoppeleinheit mit dem Stromversorgungskabel verbunden sind, dadurch gekennzeichnet, dass das Stromversorgungskabel wenigstens vier Leiter umfasst, wobei wenigstens ein Leiter einem Übertragungskanal in Abwärtsrichtung entspricht und wenigstens ein Leiter einem Übertragungskanal in Aufwärtsrichtung entspricht.

Vorzugsweise weist das Stromversorgungskabel eine Abschirmung auf, so dass die zu übertragenden Daten auf (hochfrequente) Trägerfrequenzen aufmoduliert werden können. Insbesondere ist das Stromversorgungskabel ein Drehstrom-Kabel. Vorzugsweise umfasst das kombiniertes Versorgungs- und Kommunikationssystem eine Modulator-/Oszillatorvorrichtung zum Aufmodulieren der Daten auf eine Trägerfrequenz. Diese Trägerfrequenzen werden den Übertragungskanälen vorzugsweise durch eine Zuordnungseinrichtung gemäß einem vorgegebenen Muster dynamisch zugeordnet, so dass sie je nach Bedarf ausgelastet werden und die Frequenzen bedarfsweise genutzt werden.

In einer weiteren bevorzugten Ausführungsform des kombinierten Versorgungs- und Kommunikationssystems umfasst ein Übertragungskanal jeweils zwei Leitungen. Alternativ umfasst ein Übertragungskanal jeweils eine Leitung und die Abschirmung.

Das erfindungsgemäße Verfahren zum Übertragen von Daten zwischen einem Daten-Server und wenigstens einem von mehreren Endgeräten über ein Stromversorgungskabel, wobei der Daten-Server und jedes der mehreren Endgeräte jeweils über eine Ein-/Auskoppeleinheit mit dem Stromversorgungskabel verbunden sind und wobei das Stromversorgungskabel wenigstens vier Leiter umfasst, von denen wenigstens ein Leiter einem Übertragungskanal in Abwärtsrichtung entspricht und wenigstens ein Leiter einem Übertragungskanal in Aufwärtsrichtung entspricht, das die Schritte aufweist: Auswählen wenigstens eines Übertragungskanals in Abwärtsrichtung, Aufteilen der Daten in Paketfolgen für die Übertragung über den einen Übertragungskanal, Übertragen der Paketfolgen auf dem einen Übertragungskanal zu wenigstens einem von den mehreren Endgeräten in einem Voll-Duplex-Betrieb.

Bevorzugte Ausführungsformen des erfindungsgemäßen Verfahrens weisen eines odersoweit technisch möglich - mehrere der folgenden Merkmale auf:
vor einer Übertragung von Daten in Aufwärtsrichtung von einem der mehreren Endgeräte zu dem wenigstens einen Daten-Server über einen Übertragungskanal wird geprüft, ob über den Übertragungskanal Daten von einem anderen der mehreren Endgeräte übertragen werden;
Daten werden in Aufwärtsrichtung von einem der mehreren Endgeräte zu dem wenigstens einen Daten-Server über den Übertragungskanal auf dem Stromversorgungskabel übertragen, wenn das eine Endgerät eine Übertragungsaufforderung erhalten hat;
die Übertragungsaufforderung wird von dem wenigstens einen Datenserver erzeugt;
die Daten werden in Aufwärtsrichtung von einem der mehreren Endgeräte zu dem wenigstens einen Daten-Server über einen eigenen Übertragungskanal übertragen;
der Übertragungskanal in Aufwärtsrichtung ist dem Endgerät dynamisch zugewiesen;
der Übertragungskanal in Aufwärtsrichtung ist dem Endgerät nach dem "Direct Sequence"-Verfahren oder dem "Frequency Hopping"-Verfahren dynamisch zugewiesen;
ein Übertragungskanal umfasst jeweils zwei Leitungen;
ein Übertragungskanal umfasst jeweils eine Leitung und die Abschirmung.

Ein Vorteil der erfindungsgemäßen Lösung der Aufgabe besteht darin, dass sich die Zahl der benötigten Datenleitungen und damit ihre Länge und die Dicke von Leitungsbündeln reduzieren und damit auch der Installationsaufwand z.B. in der Flugzeugkabine verringert. Die Stromverteilung wird in der Art einer optimierten Netzwerkverkabelung vorgenommen, so dass die Verteilung der elektrischen Leistung auf die Verbraucher durch eine geeignete Netztopologie bestimmt wird. Die Netztopologie kann ihrerseits die zusätzliche Verteilung der Verbraucher in Abhängigkeit vom datentechnischen Bedarf berücksichtigen. Eine Folge ist die verbesserte Zuverlässigkeit des Gesamtsystems der gleichermaßen elektrisch und datentechnisch versorgten Verbraucher.

Weitere Merkmale und Vorteile der Erfindung ergeben sich aus der folgenden Beschreibung von Ausführungsbeispielen, wobei auf die einzige beigefügte Zeichnung Bezug genommen wird.
Fig. 1 zeigt schematisch eine erste Ausführungsform des erfindungsgemäßen kombinierten Versorgungs- und Kommunikationssystem, bei der zwei Leiter für einen Übertragungskanal verwendet werden.
Fig. 2 zeigt schematisch eine zweite Ausführungsform des erfindungsgemäßen kombinierten Versorgungs- und Kommunikationssystem, bei der ein Leiter und die Abschirmung des Kabels für jeden Übertragungskanal verwendet werden.

Gegenstand der Erfindung ist ein System zur Verteilung von Daten über ein Versorgungskabel für Drehstrom, so dass sich ein Netzwerk für die gleichzeitige Übertragung von Energie z.B. für die Stromversorgung von Verbrauchern und die Hochgeschwindigkeits-Datenübertragung mit 10Mbps oder mehr ergibt.

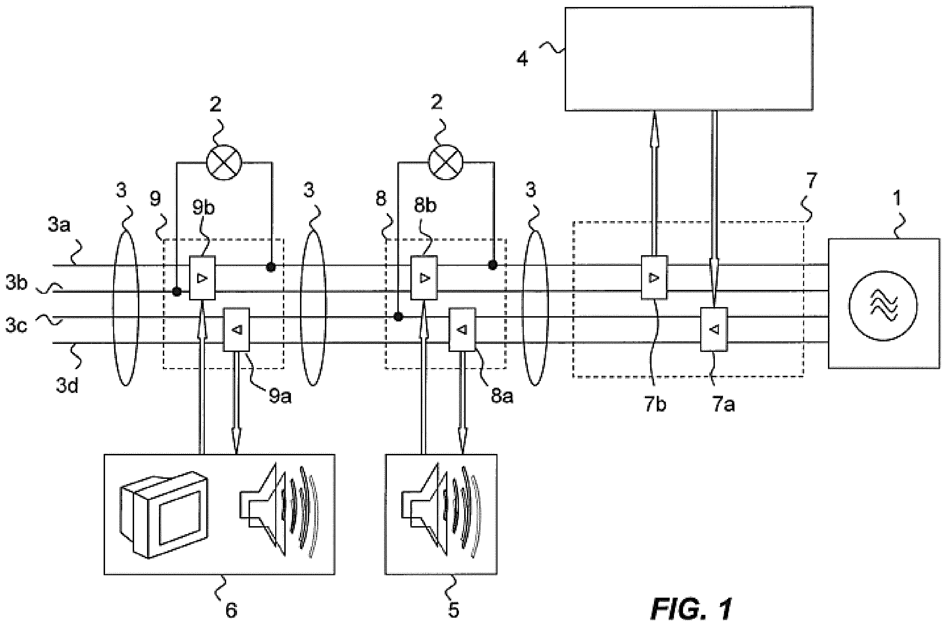

Das in Fig. 1 gezeigte kombinierte Versorgungs- und Datenübertragungssystem umfasst mindestens eine Stromversorgung 1 für die elektrische Versorgung von mehreren Verbrauchern 2. Vorzugsweise wird dieses System in einem (nicht dargestellten) Flugzeug verwendet. Die Verbraucher 2 sind über ein Stromversorgungskabel 3 mit der Stromversorgung 1 verbunden. Dieses Stromversorgungskabel 3 ist in der gezeigten Ausführungsform ein Drehstromkabel mit einem Nullleiter 3a und drei Phasenleitern 3b, 3c und 3d. Mit dem Stromversorgungskabel 3 wird beispielsweise eine Spannung von 115V mit einer Frequenz von bis zu 1kHz übertragen. Die Stromstärke beträgt beispielsweise maximal 15A.

Das Versorgungs- und Kommunikationssystem umfasst mindestens einen Daten-Server 4 zum Speichern von Kommunikationsdaten von und für die Passagiere, wobei der Übersichtlichkeit halber nur ein Server dargestellt ist. Es wird im folgenden davon ausgegangen, dass die Passagiere an ihrem Sitzplatz jeweils über ein Endgerät 5 bzw. 6 verfügen, über das sie Unterhaltungs- und Informationsprogramme an Bord des Flugzeugs nutzen können. Die einzelnen Endgeräte 5, 6 sind in dem jeweiligen Sitz integriert und insbesondere für die Wiedergabe von Audiosignalen oder Video- und Audiosignalen ausgelegt, wie es in Fig. 1 mit dem Endgerät 5 bzw. 6 angedeutet ist. So ist das Endgerät 5 für die Wiedergabe von Audiodaten ausgelegt, während das Endgerät 6 sowohl für Audiodaten wie auch für Videodaten eingerichtet ist. Es ist weiterhin möglich, dass die Endgeräte 5, 6 Eingabeeineinheiten umfassen, über die der Passagier mit dem Bordunterhaltungssystem kommunizieren kann, beispielsweise um einen Programmwunsch zu äußern, oder um eine Funkverbindung nach außerhalb des Flugzeugs aufzubauen. Das eine oder die mehreren Endgeräte 5, 6 können auch portable Geräte des Passagiers sein und über eine (nicht gezeigte) Schnittstelle in dem Sitz mit dem Kommunikationsnetz des Flugzeugs verbunden sein.

Das Stromversorgungskabel 3 verbindet die mehreren Endgeräte 5, 6 mit der Stromversorgung 1. Außerdem stellt es mehrere Übertragungskanäle bereit, über die die Kommunikationsdaten zwischen dem Daten-Server 4 und den Endgeräten 5, 6 übertragen werden.

Im einzelnen werden die Daten von dem Daten-Server 4 über eine Ein-/Auskoppeleinheit bzw. Server-Koppeleinheit 7 mit Modemeinheiten 7a und 7b auf die Leiter 3a, 3b, 3c und 3d des Stromversorgungskabels 3 aufmoduliert. Dabei dient die Modemeinheit 7a zum Übertragen von Daten in Abwärtsrichtung, d.h. vom Daten-Server 4 über das Leiterpaar 3a, 3b zu dem Endgerät 5 bzw. 6. Die Modemeinheit 7b dient dagegen zum Empfangen von Daten, die von den Endgeräten 5, 6 in Aufwärtsrichtung an den Daten-Server 4 geschickt werden. Die Verbindung zwischen Daten-Server 4 und der Modemeinheit 7a für die Abwärtsübertragung von Daten vom Daten-Server 4 zu den Endgeräten 5 bzw. 6 ist durch einen Pfeil in Richtung vom Daten-Server 4 zu den Leitern 3c und 3d dargestellt, die Verbindung zwischen dem Daten-Server 4 und der Modemeinheit 7b für die Aufwärtsübertragung von Daten von den Endgeräten 5 bzw. 6 zu dem Daten-Server 4 sind durch einen Pfeil in Richtung von den Leitern 3a und 3b zu dem Daten-Server 4 dargestellt.

Auf der anderen Seite des Stromversorgungskabels 3 ist in dem Endgerät 5 der Verbraucher 2 mit dem Nullleiter 3a und einem Phasenleiter 3c des Stromversorgungskabels 3 verbunden. Außerdem werden in einer Ein-/Auskoppeleinheit 8 des Endgeräts 5 durch eine Modemeinheit 8a die Daten auf den Leitern 3c, 3d, d.h. dem Abwärtskanal, ausgekoppelt, die für die Wiedergabe des von dem Passagier ausgewählten Unterhaltungs- oder Informationsprogramms benötigt werden. Daten, die von dem Endgerät 5 an den Daten-Server 4 geschickt werden sollen, werden über die Modemeinheit 8b auf einen entsprechenden Aufwärtskanal, d.h. das Leiterpaar 3a und 3b aufmoduliert.

Analog ist in dem Endgerät 6 der Verbraucher 2 mit dem Nullleiter 3a und einem Phasenleiter 3b des Stromversorgungskabels 3 verbunden. Außerdem werden in einer Ein-/Auskoppeleinheit 9 des Endgeräts 6 durch eine Modemeinheit 9a die Daten auf den Leitern 3c, 3d, d.h. dem Abwärtskanal, ausgekoppelt, die für die Wiedergabe des von dem Passagier ausgewählten Unterhaltungs- oder Informationsprogramms benötigt werden. Bei dem Endgerät 6 ist neben der ersten Modemeinheit 9a zusätzlich eine weitere Modemeinheit 9b vorgesehen, die zur Übertragung von Daten von dem Endgerät 6 an den Daten-Server 4 dient.

Die Verbindungen zwischen dem Leiterpaar 3c, 3d und dem Endgerät 5 bzw. 6 zum "Herunterladen" von Daten sind als Pfeil in Richtung Endgerät 5 bzw. 6 dargestellt, die Verbindungen zwischen dem Endgerät 6 und dem Leiterpaar 3a, 3b zum "Hochladen" von Daten sind als Pfeil in Richtung von dem Endgerät 6 zum Leiterpaar 3a, 3b dargestellt.

Grundsätzlich können die Übertragungskanäle auf das Stromversorgungskabel 3 als Drehstrom-Kabel mit drei Phasenleitern 3b, 3c, 3d und einem Nullleiter 3a beliebig aufgeteilt werden. Das bedeutet, dass die beiden Leiter 3a, 3b und die beiden Leiter 3c, 3d jeweils ein Leiterpaar bilden, es können aber auch die Leiter 3a, 3c ein erstes und die Leiter 3b, 3d das zweite Leiterpaar bilden, etc. Dies wird der Fachmann je nach konkreter Anwendung der Erfindung optimieren.

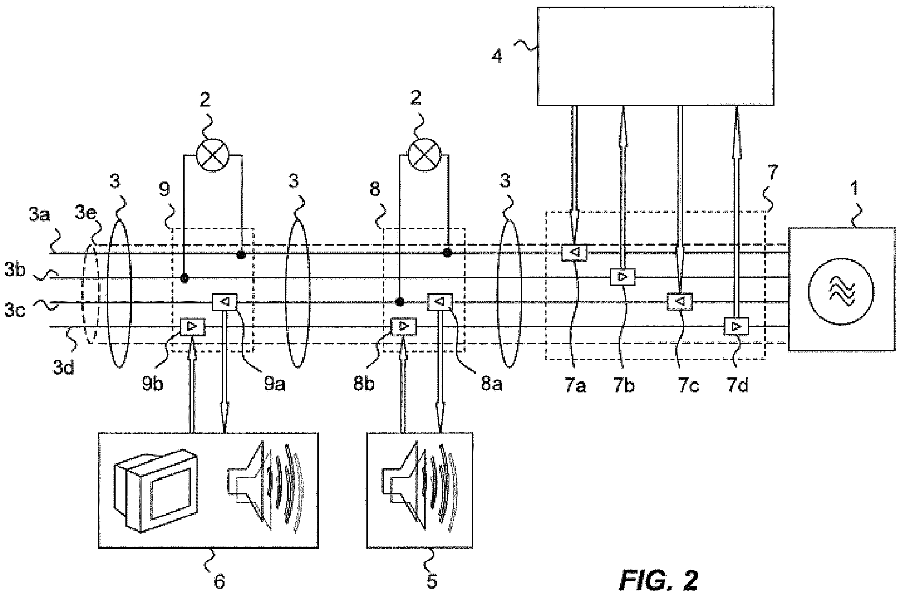

Es ist jedoch auch möglich, dass jeweils ein Leiter einen Übertragungskanal bildet. Für diesen Fall wird die Abschirmung 3e des Kabels als Gegenpol der Datenleitung genutzt. Die Abschirmung 3e ist in Fig. 2 als gestrichelter Zylinder halbperspektivisch dargestellt. Die Übertragung über einen Leiter soll im folgenden erläutert werden. Dabei wird auf Fig. 2 Bezug genommen. Im einzelnen werden die Daten von dem Daten-Server 4 über eine Ein-/Auskoppeleinheit bzw. Server-Koppeleinheit 7 mit Modemeinheiten 7a, 7b, 7c und 7d auf wenigstens einen Leiter unter den Leitern 3a, 3b, 3c und 3d des Stromversorgungskabels 3 aufmoduliert. Wie bereits gesagt ist dann der jeweilige Leiter ein Pol, und der andere Pol ist die Abschirmung 3e. Dabei dienen die entsprechenden Modemeinheiten, hier 7a und 7c, zum Übertragen von Daten in Abwärtsrichtung, d.h. vom Daten-Server 4 auf den jeweiligen Leiter 3a bzw. 3c und zu dem einen oder mehreren Endgeräten 5, 6. Die anderen Modemeinheiten, in dem Ausführungsbeispiel nach Fig. 2 die Modemeinheiten 7b und 7d, dienen dagegen zum Empfangen von Daten, die von den Endgeräten 56 in Aufwärtsrichtung an den Daten-Server 4 geschickt werden. Die Verbindungen zwischen Daten-Server 4 und Modemeinheiten 7a bzw. 7c für die Abwärtsübertragung von Daten vom Daten-Server 4 zu den Endgeräten 5 bzw. 6 sind durch einen Pfeil in Richtung auf die Leiter 3a bzw. 3c dargestellt, die Verbindungen zwischen Daten-Server 4 und Modemeinheiten 7b bzw. 7d für die Aufwärtsübertragung von Daten von den Endgeräten 5 bzw. 6 zu dem Daten-Server 4 sind durch einen Pfeil in Richtung von dem Leiter 3a bzw. 3c zu dem Daten-Server 4 dargestellt.

Auf der anderen Seite des Stromversorgungskabels 3 ist in dem Endgerät 5 der Verbraucher 2 mit dem Nullleiter 3a und einem Phasenleiter 3c des Stromversorgungskabels 3 verbunden. Außerdem werden in einer Ein-/Auskoppeleinheit 8 des Endgeräts 5 durch eine Modemeinheit 8a die Daten ausgekoppelt, die für die Wiedergabe des von dem Passagier ausgewählten Unterhaltungs- oder Informationsprogramms benötigt werden. Daten, die von dem Endgerät 5 an den Daten-Server 4 geschickt werden sollen, werden über die Modemeinheit 8b auf einen entsprechenden Aufwärtskanal, d.h. den Leiter 3d aufmoduliert.

Analog ist in dem Endgerät 6 der Verbraucher 2 mit dem Nullleiter 3a und einem Phasenleiter 3b des Stromversorgungskabels 3 verbunden. Außerdem werden in einer Ein-/Auskoppeleinheit 9 des Endgeräts 6 durch eine Modemeinheit 9a die Daten ausgekoppelt, die für die Wiedergabe des von dem Passagier ausgewählten Unterhaltungs- oder Informationsprogramms benötigt werden. Bei dem Endgerät 6 ist neben der ersten Modemeinheit 9a zusätzlich eine weitere Modemeinheit 9b vorgesehen, die zur Übertragung von Daten von dem Endgerät 6 an den Daten-Server 4 dient.

Die Verbindungen zwischen dem Leiter 3c und dem Endgerät 5 bzw. 6 zum "Herunterladen" von Daten sind als Pfeil in Richtung Endgerät 5 bzw. 6 dargestellt, die Verbindungen zwischen dem Endgerät 6 und dem Leiter 3d zum "Hochladen" von Daten sind als Pfeil in Richtung Leiter 3d dargestellt.

Die Daten werden von dem jeweiligen Endgerät von einem oder von mehreren Leitern 3a - 3d ausgelesen. In der in Fig. 2 dargestellten Konfiguration werden über den Leiter 3c Audiodaten und Videodaten übertragen. Das Endgerät 5 liest ebenso wie das Endgerät 6 die Daten von dem Leiter 3c aus. Die Leiter 3b und 3d dienen dazu, Daten von den Endgeräten an den Daten-Server 4 zu schicken. Grundsätzlich können die Übertragungskanäle auf das Stromversorgungskabel 3 als Drehstrom-Kabel mit drei Phasenleitern 3b, 3c, 3d und einem Nullleiter 3a so aufgeteilt werden, dass wenigstens ein Leiter einem Aufwärtskanal und wenigstens ein Leiter einem Abwärtskanal entsprechen. Bei insgesamt vier Leitern 3a - 3d des Kabels können die beiden restlichen Leiter fest einem Abwärtskanal bzw. einem Aufwärtskanal zugeordnet werden, sie können aber auch dynamisch je nach Bedarf zugewiesen werden. So können für den Fall, dass der Datenverkehr von den Endgeräten 5, 6 gering ist, drei Leiter für den Abwärtsverkehr reserviert werden und nur einer für den Aufwärtsverkehr. Sollten dann mehrere Endgeräte 5, 6 Bedarf an einer Aufwärtsübertragung anmelden, so kann der Daten-Server 4 die Abwärtsübertragung auf einem der drei Leiter stoppen und Aufwärtsverkehr zulassen. Dies hieße, dass u.U. die Datenübertragungsrate in Abwärtsrichtung dadurch etwas verringert wird.

Die Abschirmung 3e dient eigentlich dazu, das Abstrahlen von Strahlung durch das Stromversorgungskabel 3 zu vermeiden. Daher ist es auch möglich, die zu übertragenden Daten auf Trägerfrequenzen zu modulieren und so jeden Leiter bzw. jedes Leiterpaar für mehrere Übertragungskanäle zu nutzen. Die Abschirmung 3e unterbindet das unerwünschte Abstrahlen hoher Frequenzen auf den Leitern 3a bis 3d in dem Flugzeug. Ferner ist das geschirmte Kabel verdrillt. Bei einem Wellenwiderstand von etwa 100Ω lassen sich damit mindestens 10/100 Mbps übertragen, so dass das Kabel als Ethernet-Zuführung geeignet ist. Mit der Verwendung von Trägerfrequenzen lässt sich die Zahl der effektiven Übertragungskanäle vergrößern, die für die Übertragung von Daten zur Verfügung stehen. Die Trägerfrequenzen können dabei den Übertragungskanälen gemäß einem vorgegebenen Muster dynamisch zugeordnet werden oder statisch zugewiesen sein.

Bei einer (nicht gezeigten) bevorzugten Ausführungsform der Erfindung werden die Daten zwischen dem Daten-Server 4 und der oder jeder der Modemeinheiten 7a und 7b bzw. 7a - 7d zum Ein- und Auskoppeln auf dem Stromversorgungskabel 3 entweder über kupferbasierte Netzwerkleitungen oder über faseroptische Leiter übertragen.

Die Modemeinheiten 7a und 7b bzw. 7a - 7d können die Daten auf mehrere Arten an die Endgeräte übertragen bzw. von diesen empfangen. In Abwärtsrichtung vom Daten-Server 4 zu den Endgeräten 5, 6 erfolgt die Übertragung beispielsweise durch die Modemeinheiten 7a und 7c im Voll-Duplex-Verfahren, da nur die sendende Modemeinheit 7a bzw. 7c in Abwärtsrichtung vom Daten-Server 4 zu den auskoppelnden Modemeinheiten 8a, 9a arbeitet.

In Aufwärtsrichtung gibt es drei unterschiedliche Möglichkeiten der Übertragung, da grundsätzlich mehrere sendende Modemeinheiten 8b und 9b in dieser Richtung arbeiten können. Im ersten Fall erfolgt die Übertragung im echten Halb-Duplex-Verfahren, d.h. die auskoppelnde Modemeinheit 8b, 9b überprüft den Kanal, also hier den Leiter 3d, ob über den Kanal eine Übertragung gerade stattfindet. Ist dies der Fall, so muss das entsprechende Endgerät warten, bis der Kanal frei ist. Dazu wird der Zustand des Kanals - vorzugsweise regelmäßig - abgefragt. Sobald festgestellt wird, dass der Kanal (wieder) frei ist, kann mit der eigenen Übertragung begonnen werden.

Alternativ werden die Daten in Aufwärtsrichtung im Quasi-Voll-Duplex-Verfahren übertragen. Ein (nicht dargestelltes) Steuergerät hat die Kontrolle über den Datenverkehr und weist einzelnen Endgeräten Zeitfenster zu, in dem sie Daten an den Server in Aufwärtsrichtung übertragen können. Wenn das Zeitfenster geöffnet wird, wird die auskoppelnde Modemeinheit 8b, 9b durch einen entsprechenden Steuerbefehl von dem Steuergerät bzw. dem Daten-Server 4 informiert, und es kann anschließend mit der Übertragung der Daten beginnen.

Als weitere Alternative können die Daten in dem Voll-Duplex-Verfahren übertragen werden. Jede auskoppelnde Modemeinheit 8b, 9b sendet auf einem eigenen Kommunikationskanal. Der Kommunikationskanal kann insbesondere einer Trägerfrequenz entsprechen, die dem Kanal statisch oder dynamisch zugewiesen wird. Die dynamische Zuweisung der Trägerfrequenz kann beispielsweise nach dem "Direct Sequence"-Verfahren oder dem "Frequency Hopping"-Verfahren erfolgen.

Die Schnittstelle zwischen der eigentlichen Modemeinheit 8a, 8b, 9a, 9b und den Endgeräten wird vorzugsweise als Ethernet ausgeführt.

Eine Kombination von Basisband- und Trägerfrequenz-basierter Übertragung ist möglich, wobei bestimmte Übertragungsarten festgelegt sind und andere dynamisch angepasst werden. Die Steuerung der bidirektionalen Übertragung erfolgt über einen Voll-Duplex-Hub und/oder über Trägerfrequenzen; die Verteilung der Daten erfolgt hierarchisch über heterogene physikalische Medien.

In der bevorzugten Ausführungsform der Erfindung weist jedes Endgerät 5, 6 einen Eingangsanschluss und einen Ausgangsanschluss auf, über die es jeweils mit einem vorangehenden und einem nachfolgenden Endgerät 5, 6 verbunden ist. Das erste Endgerät ist dabei selbstverständlich direkt mit dem Daten-Server 4 verbunden, das letzte Endgerät ist über seinen Eingangsanschluss mit nur mit dem vorangehenden Endgerät verbunden. Da das Stromversorgungskabel 3 somit durch jedes der Endgeräte 5 und 6 durchgeschleift wird, wird jedes Endgerät 5, 6 mit dem Daten-Server 4 und mit der Stromquelle 1 verbunden (daisy chain).

Der Übersichtlichkeit halber sind in den Figuren nur Verbraucher 2 dargestellt, die eine Phase benötigen. Selbstverständlich ist es aber auch möglich, Drehstromverbraucher an dem Netz zu betreiben, d.h. Verbraucher 2, die mit allen drei Phasenleitern 3b, 3c und 3d sowie dem Nullleiter 3a verbunden sind.

### Bezugszeichen

- 1.: Stromversorgung
- 2.: elektrischer Verbraucher
- 3.: Stromversorgungskabel, 3a - 3d Leiter, 3e Abschirmung
- 4.: Daten-Server
- 5.: Endgerät
- 6.: Endgerät
- 7.: Ein-/Auskoppeleinheit, 7a - 7d Modemeinheiten
- 8.: Ein-/Auskoppeleinheit, 8a, 8b Modemeinheiten
- 9.: Ein-/Auskoppeleinheit, 9a, 9b Modemeinheiten

## Patentansprüche

1. Kombiniertes Versorgungs- und Kommunikationssystem, das aufweist:
einen Daten-Server (4),
eine Stromversorgung (1),
mehrere Endgeräte (5, 6), von denen jedes einen Eingangsanschluss und einen Ausgangsanschluss aufweist, und
ein Stromversorgungskabel (3), zum Übertragen von Daten zwischen dem Daten-Server (4) und mindestens einem ersten Endgerät (5) der mehreren Endgeräte (5, 6) und zum Verteilen elektrischer Leistung auf zumindest das erste Endgerät (5), wobei der Daten-Server (4) und jedes der mehreren Endgeräte (5, 6) jeweils über eine Ein-/Auskoppeleinheit (7, 8, 9) mit dem Stromversorgungskabel (3) verbunden ist, **dadurch gekennzeichnet, dass**
das Stromversorgungskabel (3) wenigstens vier Leiter (3a - 3d) umfasst, wobei zwei Leiter einem Übertragungskanal in Abwärtsrichtung entsprechen und zwei andere Leiter einem Übertragungskanal in Aufwärtsrichtung entsprechen,
wobei das Stromversorgungskabel (3) in der Weise mit den Eingangsanschlüssen und Ausgangsanschlüssen der Endgeräte (5, 6) verbunden ist, dass das erste Endgerät (5) direkt mit dem Daten-Server (4) verbunden ist und die restlichen Endgeräte (6) der mehreren Endgeräte (5, 6) jeweils mit einem vorangehenden Endgerät (5, 6) der mehreren Endgeräte (5, 6) verbunden sind, so dass das Stromversorgungskabel (3) durch jedes der Endgeräte (5, 6) durchgeschleift und auf diese Weise jedes der Endgeräte (5, 6) mit dem Daten-Server (4) und mit der Stromversorgung (1) verbunden ist.

2. Kombiniertes Versorgungs- und Kommunikationssystem nach Anspruch 1, bei dem das Stromversorgungskabel (3) eine Abschirmung (3e) aufweist.

3. Kombiniertes Versorgungs- und Kommunikationssystem nach Anspruch 1 oder 2, bei dem das Stromversorgungskabel (3) ein Drehstrom-Kabel ist.

4. Kombiniertes Versorgungs- und Kommunikationssystem nach einem der vorangehenden Ansprüche mit einer Modulator-/Oszillatorvorrichtung zum Aufmodulieren der Daten auf eine Trägerfrequenz.

5. Kombiniertes Versorgungs- und Kommunikationssystem nach Anspruch 4, mit einer Zuordnungseinrichtung zum dynamischen Zuordnen von Trägerfrequenzen und Übertragungskanälen gemäß einem vorgegebenen Muster.

6. Kombiniertes Versorgungs- und Kommunikationssystem nach einem der vorangehenden Ansprüche, bei dem ein Übertragungskanal jeweils zwei Leiter (3a, 3b; 3c, 3d) umfasst.

7. Kombiniertes Versorgungs- und Kommunikationssystem nach einem der Ansprüche 1 bis 5, bei dem ein Übertragungskanal jeweils einen Leiter (3a, 3b, 3c, 3d) und die Abschirmung (3e) umfasst.

8. Verfahren zum Übertragen von Daten zwischen einem Daten-Server (4) und wenigstens einem ersten Endgerät (5) von mehreren Endgeräten (5, 6) über ein Stromversorgungskabel (3) und zum Verteilen elektrischer Leistung von einer Stromversorgung (1) auf zumindest das erste Endgerät (5), wobei jedes der Endgeräte (5, 6) einen Eingangsanschluss und einen Ausgangsanschluss aufweist, wobei der Daten-Server (4) und jedes der mehreren Endgeräte (5, 6) jeweils über eine Ein-/Auskoppeleinheit (7, 8, 9) mit dem Stromversorgungskabel (3) verbunden ist und wobei das Stromversorgungskabel (3) wenigstens vier Leiter (3a - 3d) umfasst, von denen wenigstens zwei Leiter einem Übertragungskanal in Abwärtsrichtung entsprechen und wenigstens zwei andere Leiter einem Übertragungskanal in Aufwärtsrichtung entsprechen, wobei das Verfahren die Schritte aufweist:
Verbinden des Stromversorgungskabels (3) in der Weise mit den Eingangsanschlüssen und Ausgangsanschlüssen der Endgeräte (5, 6), dass das erste Endgerät (5) direkt mit dem Daten-Server (4) verbunden ist und die restlichen Endgeräte (6) der mehreren Endgeräte (5, 6) jeweils mit einem vorangehenden Endgerät (5, 6) der mehreren Endgeräte (5, 6) verbunden sind, so dass das Stromversorgungskabel (3) durch jedes der Endgeräte (5, 6) durchgeschleift und auf diese Weise jedes der Endgeräte (5, 6) mit dem Daten-Server (4) und mit der Stromversorgung (1) verbunden wird,
Auswählen wenigstens eines Übertragungskanals in Abwärtsrichtung,
Aufteilen der Daten in Paketfolgen für die Übertragung über den einen Übertragungskanal,
Übertragen der Paketfolgen auf dem einen Übertragungskanal zu wenigstens einem von den mehreren Endgeräten (5, 6) in einem Voll-Duplex-Betrieb.

9. Verfahren zum Übertragen von Daten über ein Stromversorgungskabel nach Anspruch 8, bei dem vor einer Übertragung von Daten in Aufwärtsrichtung von einem der mehreren Endgeräte (5, 6) zu dem wenigstens einen Daten-Server (4) über einen Übertragungskanal geprüft wird, ob über den Übertragungskanal Daten von einem anderen der mehreren Endgeräte (5, 6) übertragen werden.

10. Verfahren zum Übertragen von Daten über ein Stromversorgungskabel nach Anspruch 8, bei dem Daten in Aufwärtsrichtung von einem der mehreren Endgeräte (5, 6) zu dem wenigstens einen Daten-Server (4) über den Übertragungskanal auf dem Stromversorgungskabel übertragen werden, wenn das eine Endgerät (5, 6) eine Übertragungsaufforderung erhalten hat.

11. Verfahren zum Übertragen von Daten über ein Stromversorgungskabel nach Anspruch 10, bei dem die Übertragungsaufforderung von dem wenigstens einen Datenserver (4) erzeugt wird.

12. Verfahren zum Übertragen von Daten über ein Stromversorgungskabel nach Anspruch 8, bei dem die Daten in Aufwärtsrichtung von einem der mehreren Endgeräte (5, 6) zu dem wenigstens einen Daten-Server (4) über einen eigenen Übertragungskanal übertragen werden.

13. Verfahren zum Übertragen von Daten über ein Stromversorgungskabel nach Anspruch 12, bei dem der Übertragungskanal in Aufwärtsrichtung dem Endgerät (5, 6) dynamisch zugewiesen ist.

14. Verfahren zum Übertragen von Daten über ein Stromversorgungskabel nach Anspruch 13, bei dem der Übertragungskanal in Aufwärtsrichtung dem Endgerät (5, 6) nach dem "Direct Sequence"-Verfahren oder dem "Frequency Hopping"-Verfahren dynamisch zugewiesen wird.

15. Verfahren zum Übertragen von Daten über ein Stromversorgungskabel nach einem der Ansprüche 8 bis 14, bei dem ein Übertragungskanal jeweils zwei Leiter (3a, 3b; 3c, 3d) umfasst.

16. Verfahren zum Übertragen von Daten über ein Stromversorgungskabel nach einem der Ansprüche 8 bis 14, bei dem ein Übertragungskanal jeweils einen Leiter (3a, 3b, 3c, 3d) und die Abschirmung (3e) umfasst.

## Claims

1. Combined power supply and communication system, having:
a data server (4),
a power supply (1),
a plurality of terminals (5, 6), each of which has an input connection and an output connection, and
a power supply cable (3) for transmitting data between the data server (4) and at least one first terminal (5) of the plurality of terminals (5, 6) and for distributing electric power to at least the first terminal (5), wherein the data server (4) and each of the plurality of terminals (5, 6) is in each case connected to the power supply cable (3) via a coupling-in/coupling-out unit (7, 8, 9), **characterized in that** the power supply cable (3) has at least four conductors (3a-3d), wherein two conductors correspond to a transmission channel in the downlink direction and two other conductors correspond to a transmission channel in the uplink direction,
wherein the power supply cable (3) is connected to the input connections and output connections of the terminals (5, 6) such that the first terminal (5) is connected directly to the data server (4) and the other terminals (6) of the plurality of terminals (5, 6) are each connected to a preceding terminal (5, 6) of the plurality of terminals (5, 6), such that the power supply cable (3) daisy-chains each of the terminals (5, 6) and each of the terminals (5, 6) is thereby connected to the data server (4) and to the power supply (1).

2. Combined power supply and communication system according to Claim 1, wherein the power supply cable (3) has a shield (3e).

3. Combined power supply and communication system according to Claim 1 or 2, wherein the power supply cable (3) is a three-phase current cable.

4. Combined power supply and communication system according to one of the preceding claims, having a modulator/oscillator device for modulating the data to a carrier frequency.

5. Combined power supply and communication system according to Claim 4, having an assignment apparatus for dynamically assigning carrier frequencies and transmission channels in accordance with a predefined model.

6. Combined power supply and communication system according to one of the preceding claims, wherein a transmission channel in each case comprises two conductors (3a, 3b; 3c, 3d).

7. Combined power supply and communication system according to one of Claims 1 to 5, wherein a transmission channel in each case comprises one conductor (3a, 3b, 3c, 3d) and the shield (3e).

8. Method for transmitting data between a data server (4) and at least one first terminal (5) of a plurality of terminals (5, 6) via a power supply cable (3) and for distributing electric power from a power supply (1) to at least the first terminal (5), wherein each of the terminals (5, 6) has an input connection and an output connection, wherein the data server (4) and each of the plurality of terminals (5, 6) is in each case connected to the power supply cable (3) via a coupling-in/coupling-out unit (7, 8, 9), and wherein the power supply cable (3) has at least four conductors (3a-3d), at least two conductors of which correspond to a transmission channel in the downlink direction and at least two other conductors of which correspond to a transmission channel in the uplink direction, wherein the method comprises the steps of:
connecting the power supply cable (3) to the input connections and output connections of the terminals (5, 6) such that the first terminal (5) is connected directly to the data server (4) and the other terminals (6) of the plurality of terminals (5, 6) are each connected to a preceding terminal (5, 6) of the plurality of terminals (5, 6), such that the power supply cable (3) daisy-chains each of the terminals (5, 6) and each of the terminals (5, 6) is thereby connected to the data server (4) and to the power supply (1),
selecting at least one transmission channel in the downlink direction,
dividing the data into sequences of packets for transmission via the one transmission channel,
transmitting the sequences of packets on the one transmission channel to at least one of the plurality of terminals (5, 6) in a full-duplex mode.

9. Method for transmitting data via a power supply cable according to Claim 8, wherein, prior to a transmission of data in the uplink direction from one of the plurality of terminals (5, 6) to the at least one data server (4) via a transmission channel, it is checked whether data are being transmitted by another of the plurality of terminals (5, 6) via the transmission channel.

10. Method for transmitting data via a power supply cable according to Claim 8, wherein data are transmitted in the uplink direction on the power supply cable by one of the plurality of terminals (5, 6) to the at least one data server (4) via the transmission channel when the one terminal (5, 6) has received a transmission request.

11. Method for transmitting data via a power supply cable according to Claim 10, wherein the transmission request is generated by the at least one data server (4) .

12. Method for transmitting data via a power supply cable according to Claim 8, wherein the data are transmitted in the uplink direction by one of the plurality of terminals (5, 6) to the at least one data server (4) via a dedicated transmission channel.

13. Method for transmitting data via a power supply cable according to Claim 12, wherein the transmission channel is dynamically assigned to the terminal (5, 6) in the uplink direction.

14. Method for transmitting data via a power supply cable according to Claim 13, wherein the transmission channel is dynamically assigned to the terminal (5, 6) in the uplink direction using the direct sequence method or the frequency hopping method.

15. Method for transmitting data via a power supply cable according to one of Claims 8 to 14, wherein a transmission channel in each case comprises two conductors (3a, 3b; 3c, 3d).

16. Method for transmitting data via a power supply cable according to one of Claims 8 to 14, wherein a transmission channel in each case comprises one conductor (3a, 3b, 3c, 3d) and the shield (3e).

## Revendications

1. Système combiné d'alimentation et de communication, comprenant :
un serveur de données (4),
une alimentation électrique (1),
plusieurs terminaux (5, 6), parmi lesquels chacun possède une borne d'entrée et une borne de sortie, et
un câble d'alimentation électrique (3) destiné à la transmission de données entre le serveur de données (4) et au moins un premier terminal (5) parmi les plusieurs terminaux (5, 6) et à la distribution de puissance électrique au moins au premier terminal (5), le serveur de données (4) et chacun des plusieurs terminaux (5, 6) étant connectés au câble d'alimentation électrique (3) respectivement par le biais d'une unité d'injection/découplage (7, 8, 9), **caractérisé en ce que** le câble d'alimentation électrique (3) comporte au moins quatre conducteurs (3a - 3d), deux conducteurs correspondant à un canal de transmission dans la direction descendante et deux autres conducteurs correspondant à un canal de transmission dans la direction montante,
le câble d'alimentation électrique (3) étant relié aux bornes d'entrée et aux bornes de sortie des terminaux (5, 6) de telle sorte que le premier terminal (5) est relié directement au serveur de données (4) et les terminaux restants (6) des plusieurs (5, 6) sont respectivement reliés à un terminal précédent (5, 6) des plusieurs terminaux (5, 6), de sorte que le câble d'alimentation électrique (3) passe en boucle à travers chacun des terminaux (5, 6) et chacun des terminaux (5, 6) est ainsi relié au serveur de données (4) et à l'alimentation électrique (1).

2. Système combiné d'alimentation et de communication selon la revendication 1, avec lequel le câble d'alimentation électrique (3) possède un blindage (3e).

3. Système combiné d'alimentation et de communication selon la revendication 1 ou 2, avec lequel le câble d'alimentation électrique (3) est un câble pour courant triphasé.

4. Système combiné d'alimentation et de communication selon l'une des revendications précédentes, comprenant un arrangement modulateur/oscillateur destiné à superposer par modulation les données sur une fréquence porteuse.

5. Système combiné d'alimentation et de communication selon la revendication 4, comprenant un dispositif d'association destiné à associer dynamiquement des fréquences porteuses et des canaux de transmission conformément à un modèle prédéfini.

6. Système combiné d'alimentation et de communication selon l'une des revendications précédentes, avec lequel un canal de transmission comprend respectivement deux conducteurs (3a, 3b ; 3c, 3d).

7. Système combiné d'alimentation et de communication selon l'une des revendications 1 à 5, avec lequel un canal de transmission comprend respectivement un conducteur (3a, 3b, 3c, 3d) et le blindage (3e).

8. Procédé de transmission de données entre un serveur de données (4) et au moins un premier terminal (5) parmi plusieurs terminaux (5, 6) par le biais d'un câble d'alimentation électrique (3) et de distribution de puissance électrique d'une alimentation électrique (1) au moins au premier terminal (5), chacun des terminaux (5, 6) possédant une borne d'entrée et une borne de sortie, le serveur de données (4) et chacun des plusieurs terminaux (5, 6) étant connectés au câble d'alimentation électrique (3) respectivement par le biais d'une unité d'injection/découplage (7, 8, 9) et le câble d'alimentation électrique (3) comportant au moins quatre conducteurs (3a - 3d), parmi lesquels au moins deux conducteurs correspondent à un canal de transmission dans la direction descendante et au moins deux autres conducteurs correspondent à un canal de transmission dans la direction montante, le procédé comprenant les étapes suivantes :
connexion du câble d'alimentation électrique (3) aux bornes d'entrée et aux bornes de sortie des terminaux (5, 6) de telle sorte que le premier terminal (5) est relié directement au serveur de données (4) et les terminaux restants (6) des plusieurs (5, 6) sont respectivement reliés à un terminal précédent (5, 6) des plusieurs terminaux (5, 6), de sorte que le câble d'alimentation électrique (3) passe en boucle à travers chacun des terminaux (5, 6) et chacun des terminaux (5, 6) est ainsi relié au serveur de données (4) et à l'alimentation électrique (1),
sélection d'au moins un canal de transmission dans la direction descendante,
division des données en séquences de paquets pour la transmission par le biais dudit canal de transmission,
transmission des séquences de paquets sur ledit canal de transmission à au moins l'un des plusieurs terminaux (5, 6) dans un régime duplex intégral.

9. Procédé de transmission de données par le biais d'un câble d'alimentation électrique selon la revendication 8, avec lequel un contrôle est effectué avant une transmission de données dans la direction montante de l'un des plusieurs terminaux (5, 6) vers l'au moins un serveur de données (4) par le biais d'un canal de transmission afin de vérifier si des données d'un autre des plusieurs terminaux (5, 6) sont transmises par le biais du canal de transmission.

10. Procédé de transmission de données par le biais d'un câble d'alimentation électrique selon la revendication 8, avec lequel des données sont transmises dans la direction montante de l'un des plusieurs terminaux (5, 6) vers l'au moins un serveur de données (4) par le biais du canal de transmission sur le câble d'alimentation électrique lorsque ledit terminal (5, 6) a reçu une demande de transmission.

11. Procédé de transmission de données par le biais d'un câble d'alimentation électrique selon la revendication 10, avec lequel la demande de transmission est générée par l'au moins un serveur de données (4).

12. Procédé de transmission de données par le biais d'un câble d'alimentation électrique selon la revendication 8, avec lequel les données sont transmises dans la direction montante de l'un des plusieurs terminaux (5, 6) vers l'au moins un serveur de données (4) par le biais d'un canal de transmission propre.

13. Procédé de transmission de données par le biais d'un câble d'alimentation électrique selon la revendication 12, avec lequel le canal de transmission dans la direction montante est attribué dynamiquement au terminal (5, 6).

14. Procédé de transmission de données par le biais d'un câble d'alimentation électrique selon la revendication 13, avec lequel le canal de transmission dans la direction montante est attribué dynamiquement au terminal (5,6) selon le procédé de la « séquence directe » ou selon le procédé du « saut de fréquence ».

15. Procédé de transmission de données par le biais d'un câble d'alimentation électrique selon l'une des revendications 8 à 14, avec lequel un canal de transmission comporte respectivement deux conducteurs (3a, 3b ; 3c, 3d).

16. Procédé de transmission de données par le biais d'un câble d'alimentation électrique selon l'une des revendications 8 à 14, avec lequel un canal de transmission comporte respectivement un conducteur (3a, 3b, 3c, 3d) et le blindage (3e).
